# EUROPÄISCHE PATENTSCHRIFT

(11) **EP 1 705 076 B1**
(45) Veröffentlichungstag und Bekanntmachung des Hinweises auf die Patenterteilung: **22.10.2008**
(21) Anmeldenummer: 06004408.8
(22) Anmeldetag: 03.03.2006
(51) Int. Cl.: B60R 21/20

(54) **Kraftfahrzeugverkleidungsteil mit Schwächungsstellen und Verfahren zu dessen Herstellung**
Trim panel for a vehicle with weakened portions and method of manufacture the same
Panneau de revêtement pour véhicule avec des zones d'affaiblissement et la méthode de production

(30) Priorität: 23.03.2005 DE 102005013477
(43) Veröffentlichungstag der Anmeldung: 27.09.2006
(73) Patentinhaber: Lisa Dräxlmaier GmbH, 84137 Vilsbiburg (DE)
(72) Erfinder: Geltinger, Hubert, 84137 Vilsbiburg (DE); Friedberger, Roland, Boiling Springs, SC 29316 (US); Müller, Henry, Dr., 84030 Landshut (DE)
(74) Vertreter: HOFFMANN EITLE

(56) Entgegenhaltungen:
- EP-A- 0 916 555
- WO-A-97/03866
- DE-A1- 10 104 036
- FR-A- 2 799 700
- US-B1- 6 199 897
- US-B1- 6 402 189

## Beschreibung

### Technisches Gebiet

Die Erfindung bezieht sich auf die Kraftfahrzeugtechnik und insbesondere die Airbag-Technik. Dort sind Airbags in Verkleidungsteilen untergebracht, wobei die Verkleidungsteile durch Schwächungsstellen die Airbagentfaltung im Notfall zulassen. Dabei ist man bestrebt, bei einwandfreier Funktionsweise zu verhindern, dass die Schwächungsstellen von außen sichtbar sind.

Auf diesem Gebiet betrifft die Erfindung ein KraftfahrzeugVerkleidungsteil mit Schwächungsstellen für eine Airbag-Entfaltungsöffnung, umfassend eine Trägerschicht, eine darauf flächig applizierte Abstandsschicht und eine auf der der Trägerschicht abgewandten Seite der Abstandsschicht befindliche Dekorschicht, wobei an bestimmten Stellen, insbesondere entlang von Schwächungslinien in deren Bereich, zur gezielten Materialschwächung als Sollbruchstellen Material entnommen oder verdrängt ist, wobei diese Materialentnahmestellen oder Materialverdrängungsstellen vor der Außenoberfläche der Dekorschicht enden und somit von außen nicht sichtbar sind.

### Stand der Technik

Aus der DE 101 35 224 A1 ist eine Anordnung zur Innenausstattung eines Kraftfahrzeugs und ein Verfahren zu deren Herstellung bekannt. Ein Innenverkleidungsteil für eine Airbag-Entfaltungsöffnung ist mit Schwächungsstellen versehen. Das Verkleidungsteil umfasst in einer Schichtung eine Trägerschicht, eine darauf flächig applizierte Abstandsschicht und eine auf der der Trägerschicht abgewandten Seite der Abstandsschicht befindliche Dekorschicht. Die Abstandsschicht besteht hierbei beispielsweise aus Polyurethanschaum. Entlang von Schwächungslinien ist in der Trägerschicht und der Abstandsschicht Material im Sinne einer Aufreißperforation entnommen, um so in diesen Schichten Schwächungsstellen zu erzeugen. An derselben Stelle entlang der Schwächungslinien befindet sich auch eine Materialentnahmestelle in der Dekorschicht. Die Materialentnahme oder Materialverdrängung kann durch Einschneiden bzw. Einfräsen erfolgen. Die Materialentnahme in der Dekorschicht erfolgt so von der innenliegenden Oberfläche her, dass diese Entnahmestelle von der Außenseite her nicht sichtbar ist.

Aus der FR-A-2799700 ist ein Kraftfahrzeugsverkleidungsteil bekannt, das die Merkmale im Oberbegriff des Patentanspruchs 1 aufweist. Ferner offenbart die US-A-6,199,8997 ein Kraftfahrzeugverkleidungsteil mit Schwächungsstellen für eine Airbagentfaltungsöffnung. Dabei sind mehrere Schichten mit Schwächungsstellen dargestellt.

### Darstellung der Erfindung

Die Erfindung geht von der Erkenntnis aus, dass auch dann, wenn die Schwächungsstellen in der Dekorschicht von außen her nicht sichtbar sind, diese trotzdem im Laufe der Zeit sichtbar werden kann.

Dem gemäß besteht das zu lösende Problem darin, ein Kraftfahrzeugverkleidungsteil mit Schwächungsstellen für eine Airbag-Entfaltungsöffnung derart zu gestalten, dass die Schwächungsstellen dauerhaft von außen nicht sichtbar sind.

Dieses Problem (Aufgabe) wird im Zusammenhang mit den Merkmalen des Oberbegriffs des Anspruchs 1 dadurch gelöst, dass zwischen der Innenoberfläche der Dekorschicht und der benachbarten Oberfläche der Abstandsschicht jeweils in Anlage an der Oberfläche der beiden Schichten eine Kunststofffolie angeordnet ist, die an derselben Schwächungsstelle mindestens eine Materialentnahmestelle oder eine Materialverdrängungsstelle aufweist.

Dadurch ist von Beginn an sichergestellt, dass die Schwächungsstellen von außen nicht sichtbar sind. Auch die Sollbruchstelle wird in ihrer Funktion zur Freigabe des Airbags nicht beeinträchtigt, da die Kunststofffolie ebenfalls mit einer Schwächungsstelle versehen ist. Darüber hinaus wirkt sich die Kunststofffolie überraschender Weise dahingehend vorteilhaft aus, dass auch im Laufe der Zeit im Zusammenhang mit thermischen und mechanischen Beanspruchungen, insbesondere die in der Dekorschicht vorgesehene Schwächungsstelle von außen her nicht sichtbar wird, was durch Einsenkung oder Einfallen des Materials an der Schwächungsstelle möglich wäre.

Die Abstandsschicht kann eine Schaumstoffschicht oder ein Abstandsgewirke oder ein Faservlies sein.

Von besonderem Vorteil für die Lösung der genannten Aufgabe ist die Ausbildung der Materialentnahmestelle der Kunststofffolie als eine Perforation, die insbesondere eine Perforationslinie ist. Dadurch bleiben Materialstege vorhanden, die intensiver dazu beitragen, dass sich die Dekorschicht unter thermischer oder mechanischer Beeinflussung nicht bewegen kann. Diese Wirkung verstärkt sich noch, wenn bei der Ausbildung der Perforationslinie abwechselnd durch Schlitze und Materialstege das Längenverhältnis der Schlitze zu den Stegen in Linienrichtung 15-6:1 und insbesondere etwa 10:1 ist. Dabei kann es auch von Vorteil sein, wenn die Stege auf eine Restwandstärke der Schicht reduziert sind.

Zweckmäßiger Weise kann die Materialentnahmestelle der Abstandsschicht zumindest im Anschluss an die Perforationslinie der Kunststofffolie auch eine Perforationslinie sein, wobei beide Perforationslinien kongruent sein können. Für eine Wirkungsverstärkung können die Schwächungsstellen in der Dekorschicht und in der zusätzlichen Materialschicht auch versetzt zueinander angeordnet sein.

Ergänzend ist es möglich, zwischen der Abstandsschicht und der Trägerschicht ebenfalls eine derartige Kunststofffolie anzuordnen.

Die Perforationslinien können unterschiedlich verlaufen, beispielsweise gradlinig oder gewellt oder zick-zack-förmig.

Für eine ausreichende Haftung zwischen der Kunststofffolie und der Dekorschicht kann die an der Dekorschicht innen anliegende Kunststofffolie oberflächenbehandelt sein, beispielsweise durch Waschen/Abreiben mit einem Reinigungs- bzw. Lösungsmittel, oder Strahlen, Plasmabehandlung, Fluorierung oder mechanisches Aufrauen.

Die vorerwähnte Restwandstärke der Dekorschicht an der Schwächungsstelle beträgt 0,2 bis 0,8 mm und vorzugsweise 0,4 bis 0,8 mm. Im sog. Initialbereich, d.h. dort wo sich der Bereich zuerst befindet, kann die Restwandstärke der Dekorschicht an den Schwächungsstellen 0,15 bis 0,4 mm und im übrigen Bereich 0,2 bis 0,8 mm und vorzugsweise 0,4 bis 0,8 mm betragen.

Die Dekorschicht kann aus unterschiedlichem Material bestehen, beispielsweise Leder oder Kunststoff.

Erfindungsgemäß kann ein Kraftfahrzeugverkleidungsteil mit Schwächungsstellen für eine Airbag-Entfaltungsöffnung nach folgenden Verfahrensschritten ablaufen:
- die Abstandsschicht wird zumindest einseitig mit der Kunststofffolie belegt,
- dieses Vorlaminat wird auf die Trägerschicht kaschiert, zumindest mit der Kunststofffolie zur Sichtseite hin,
- anschließend wird das Vorlaminat von der Sichtseite her mit einer geeigneten Vorrichtung geschwächt, insbesondere bis auf die Trägerschicht,
- auf dieses so präparierte Zwischenlaminat wird die Dekorschicht aufkaschiert, nachdem zuvor auf der der Sichtseite der Dekorschicht abgewandten Innenoberfläche die Schwächung eingebracht wurde.

Ein anderes, paralleles Verfahren umfasst folgende Verfahrensschritte:
- die Abstandsschicht wird zumindest einseitig mit der Kunststofffolie belegt,
- in dieses Vorlaminat wird die Schwächung eingebracht, die insbesondere durch die gesamte Abstandsschicht verläuft,
- auf dieses so präparierte Vorlaminat wird die Dekorschicht aufkaschiert, nachdem zuvor auf der der Sichtseite der Dekorschicht abgewandten Innenoberfläche die Schwächung eingebracht wurde,
- dieses Zwischenlaminat wird anschließend auf die Trägerschicht kaschiert.

Bei diesem Verfahren ist vorgesehen, dass für die Schwächung ein durchgehender Schnitt beliebiger Kontur oder aber ein perforierender Schnitt beliebiger Kontur vorgenommen wird.

Die Schwächung selbst kann durch Lasern, Stanzen oder Fräsen erfolgen.

Im Bereich der Schwächungsstellen kann die Trägerschicht von der Rückseite her aufgefräst werden. Diese Ausfräsung kann im Wesentlichen entlang einer Linie verlaufen, die bevorzugt als eine Perforationslinie dargestellt ist, so dass Stege stehen bleiben. Durch diese Fräsung kann eine Klappe gebildet werden, die beim Airbagschuss aufklappt und den Airbagsack durchlässt. Für eine bessere Bindung zwischen der Kunststofffolie und insbesondere der Dekorschicht kann die Kunststofffolie insbesondere auf der Sichtseite vorbehandelt sein.

### Kurze Beschreibung der Zeichnungen

Figur 1 zeigt eine perspektivische Ansicht eines Teils einer Instrumententafel eines Kraftfahrzeugs.

Figur 2 zeigt in vergrößerter Darstellung eine Schnittansicht entlang der Linie A-A in Figur 1 durch den Schichtaufbau eines Kraftfahrzeugverkleidungsteils mit Schwächungsstellen für eine Airbag-Entfaltungsöffnung.

### Beschreibung von Ausführungsbeispielen der Erfindung

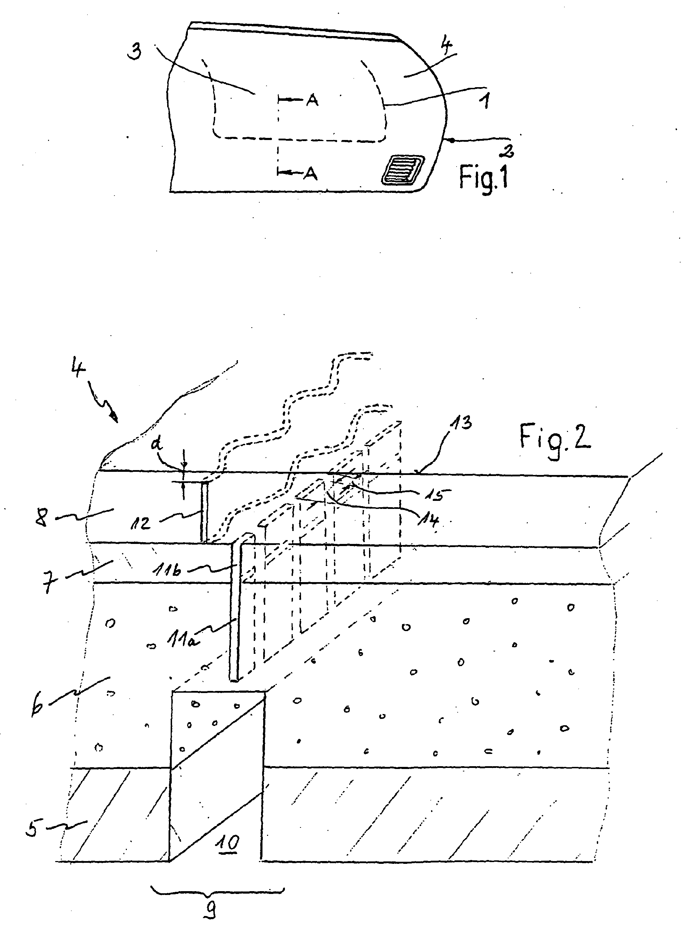

Der Figur 1 ist schematisch ein Teil einer Instrumententafel eines Kraftfahrzeugs zu entnehmen, und zwar dort, wo sich hinter der Instrumententafel ein nicht dargestellter Airbag befindet bzw. eine nicht sichtbare Airbag-Entfaltungsöffnung, die durch eine ebenfalls von außen nicht sichtbare Schwächungslinie 1 als gestrichelte Linie gekennzeichnet ist. Das Bezugszeichen 2 bezeichnet die Instrumententafel selbst und das Bezugszeichen 3 die nicht sichtbare Airbag-Entfaltungsöffnung. Das Bezugszeichen 4 bezeichnet das Kraftfahrzeugverkleidungsteil der Instrumententafel, wie es im Schnitt in Figur 2 dargestellt ist.

Der Schichtaufbau des Kraftfahrzeugverkleidungsteils 4 besteht von innen nach außen aus einer Trägerschicht 5, einer Abstandsschicht 6, einer Kunststofffolie 7 und einer Dekorschicht 8. Die Abstandsschicht 6 ist hier als eine Schaumstoffschicht dargestellt, kann aber auch ein Abstandsgewirke sein. Die Dekorschicht 8 ist in erster Linie eine Lederschicht, kann aber auch eine Kunststoffschicht als sogenannte Planware oder eine Schicht aus einem anderen geeigneten Oberflächenmaterial sein.

In einem Schwächungsbereich 9 entlang der Schwächungslinie 1, befindet sich durch die Trägerschicht 5 und einen Teil der Schaumstoffschicht 6 eine Ausfräsung 10, sowie in zumindest einem Teil der Schaumstoffschicht 6 eine Perforationslinie 11a und in der Kunststofffolie 7 eine Perforationslinie 11b und schließlich in der Dekorschicht 8 eine hier wellenförmig dargestellte Schwächungsstelle 12, die in einem Abstand "d" vor der Außenoberfläche 13 der Dekorschicht 8 endet, damit die Schwächungsstelle von außen nicht sichtbar ist. Die Schwächungsstelle 12 ist in der Darstellung eine durchgehende Schnittlinie bzw. Materialentnahmestelle als Schnittlinie, obwohl es sich dabei auch um eine Perforation handeln kann. Die Perforationslinie 11b besteht aus Schlitzen 14 und Stegen 15. Vorzugsweise ist das Längenverhältnis der Schlitze 14 zu den Stegen 15 10:1, kann sich aber auch in einem Bereich von 15:1 und 6:1 bewegen. Das Maß "d" beträgt ungefähr 0,2 bis 0,8 mm. Diese Restwandstärke beträgt im sog. Initialbereich, d.h. dort wo sich der Bereich zuerst öffnet, 0,15 bis 0,4 mm, im übrigen Bereich 0,2 bis 0,8 mm. Wie Figur 2 entnommen werden kann, sind die Schwächungslinien 11a, b und 12 versetzt zueinander, was allerdings nicht unbedingt der Fall sein muss. Die bei der Perforation verbleibenden Stege 15 können zusätzlich auf eine definierte Restwandstärke können zusätzlich auf eine definierte Restwandstärke geschwächt sein. Der Initialbereich kann auch ein durchgehender Schnitt oder eine durchgehende Perforation sein, der bzw. die anschließend z.B. durch eine Plakette abgedeckt wird. Auch kann der Initialbereich ein genähter Bereich sein, der ebenfalls anschließend z.B. durch eine Plakette abgedeckt wird. Als Dekormaterialien werden vorzugsweise Leder, Kunstleder, lederartige Werkstoffe oder sog. Planwaren mit Thermoplast- oder Duromer-Deckschichten eingesetzt.

Es sind verschiedene Herstellungswege möglich:
Weg A:
   - Die Schaumstoffschicht 6, die auch als Abstandsgewirke ausgebildet sein kann, wird in einem ersten Schritt, zumindest einseitig, mit der Folie 7 versehen.
   - Dieses Vorlaminat wird auch auf den Träger 5 kaschiert, und zwar mit der Folie 7 zur Sichtseite (in Figur 2 nach oben) oder aber dieses wird durch Verschäumen von Träger 5 und Folie 7 hergestellt.
   - Anschließend wird das Vorlaminat bzw. Bauteil von der Sichtseite her (in Figur 2 von oben her) mit einer geeigneten Schneidvorrichtung geschwächt, und zwar entweder mittels eines durchgehenden Schnitts beliebiger Kontur oder aber durch einen perforierend geführten Schnitt, ebenfalls beliebiger Form/Kontur.
   - Vorzugsweise müsste diese Schwächung bis auf den Träger ausgeführt werden.
   - Die Schwächung kann mittels Messer (ziehender Schnitt, oszillierendes Messer), Laser, Stanze oder Fräse erfolgen. Beim Lasern kann die Schwächung auch von der Rückseite her erfolgen.
   - Auf die so präparierte Tafel wird jetzt die Dekorschicht 8 aus Leder oder einer sog. Planware (PU, PVC etc.) aufkaschiert. Im Leder bzw. in der Planware ist vorher eine Schwächung (12) eingebracht worden.
Weg B:
   - Die Abstandsschicht 6 als Schaumstoffschicht oder Abstandsgewirke wird im ersten Schritt, zumindest einseitig, mit der Folie 7 versehen.
   - In dieses Vorlaminat wird die Schwächung eingebracht. Diese Schwächung kann dabei ein durchgehender Schnitt beliebiger Form/Kontur oder aber vorzugsweise ein perforierend ausgeführter Schnitt - ebenfalls beliebiger Form/Kontur - sein. Vorzugsweise sollte die Schwächung durch die gesamte Abstandsschicht verlaufen. Falls eine Perforation vorgesehen ist, werden die bei der Perforation verbleibenden Stege in der Folie zusätzlich auf eine definierte Restwandstärke geschwächt. (Optional)

Auf diese so präparierte Abstandsschicht wird nun die Dekorschicht 8 aufkaschiert. Dabei ist vorher im Leder bzw. der Planware der Dekorschicht eine Schwächung eingebracht worden. Das sich hieraus ergebende Laminat aus Abstandsschicht 6, Folie 7 und Dekorschicht 8 wird anschließend auf den Träger 5 kaschiert.

Die Folie 8 verhindert für sich oder in Verbindung mit der besonderen Schwächung und eventuell mit den unterschiedlichen Konturen, Verläufen und Positionen bei thermischer und/oder mechanischer Beanspruchung ein Verschieben der Dekorschicht 8 und daraus möglicherweise resultierendes Sichtbarwerden der Schwächungslinie bei Betrachtung der Instrumententafel von außen. Es kann somit nicht nur auf die Airbagnaht verzichtet werden, sondern es kann erheblich auf Dauer das optische Erscheinungsbild verbessert werden.

Eine Instrumententafel, die aus Träger 5, Abstandsschicht 6, Folie 7 und Dekorschicht 8 besteht, kann auf folgende Weise im Airbagbereich geschwächt werden:
- Schwächen der Folie 7, Hinterschäumen mit der Schaumstoffschicht 6 und dann Auffräsen (10) des Trägers 5 von der Rückseite her
- nur Hinterschäumen und dann Auffräsen des Trägers 5 von der Rückseite her
- Verschäumen von Träger 5 und Folie 7 und anschließendes Schwächen des Airbagbereichs im Verbund bis auf eine vorgegebene Restwandstärke "d", z. B. durch Lasern.

Um bei dieser Instrumententafel anschließend eine unsichtbare Reißlinie im zusätzlich aufgebrachten Dekor zu realisieren, sind folgende Schritte notwendig bzw. können notwendig sein:
- stärkere Schwächung des Laminatverbundes von Folie 7, Schaumstoffschicht 6 und Träger 5
- eine zusätzliche Schwächung kann aber auch z. B. dadurch realisiert werden, dass der Laminatverbund von der Sichtseite her komplett oder perforiert aufgeschnitten wird. Dieser Schnitt kann mit einem Messer - mittels ziehendem Schnitt oder mit Hilfe eines oszillierenden Messers - per Fräse, Stanze oder Laser erfolgen. Der Schnitt kann nur die Folie schwächen oder aber Folie + Schaumstoffschicht.
- die Folie wird ggf., je nach Material und Herstellungsverfahren, bezüglich der Oberfläche vorbehandelt, so dass anschließend eine ausreichende Haftung zwischen dieser Folie und dem zusätzlichen Dekor gewährleistet ist. Diese Oberflächenbehandlung kann realisiert werden durch:
   - Waschen/Abreiben mit einem geeigneten Reinigungs- bzw. Lösungsmittel
   - Strahlen mit einem geeigneten Strahlmittel
   - Plasmabehandlung - Fluorierung - mechanisches Aufrauen

Für die einzelnen Schichten 5, 6, 7 und 8 sind beispielsweise folgende Werte anzusetzen:
5: 1,5 bis 5 mm
6: 1 bis 15 mm
7: 0,2 bis 2,0 mm
8: 0,6 bis 2,0 mm

## Patentansprüche

1. Kraftfahrzeugverkleidungsteil mit Schwächungsstellen (10, 11, 12) für eine Airbag-Entfaltungsöffnung (3), umfassend eine Trägerschicht (5), eine darauf flächig applizierte Abstandsschicht (6) und eine auf der der Trägerschicht (5) abgewandten Seite der Abstandsschicht (6) befindliche Dekorschicht (8), wobei an bestimmten Stellen, insbesondere entlang von Schwächungslinien (1) in deren Bereich (9), zur gezielten Materialschwächung als Sollbruchstellen Material entnommen oder verdrängt ist, wobei diese Materialentnahmestellen (10; 11; 12) oder Materialverdrängungsstellen vor der Außenoberfläche der Dekorschicht (8) enden (d) und somit von außen nicht sichtbar sind, **dadurch gekennzeichnet, dass** zwischen der Innenoberfläche der Dekorschicht (8) und der benachbarten Oberfläche der Abstandsschicht (6) jeweils in Anlage der Oberfläche der beiden Schichten eine Kunststofffolie (7) angeordnet ist, die im selben Schwächungsbereich (9) mindestens eine Materialentnahmestelle (11) oder Materialverdrängungsstelle aufweist.

2. Kraftfahrzeugverkleidungsteil nach Anspruch 1, **dadurch gekennzeichnet, dass** die Abstandsschicht (6) eine Schaumstoffschicht oder ein Abstandsgewirke oder ein Faservlies ist.

3. Kraftfahrzeugverkleidungsteil nach Anspruch einem der Ansprüche 1 bis 2, **dadurch gekennzeichnet, dass** die Materialentnahmestelle (11) der Kunststofffolie (7) durch eine Perforation gebildet ist, die insbesondere eine Perforationslinie ist.

4. Kraftfahrzeugverkleidungsteil nach Anspruch 3, **dadurch gekennzeichnet, dass** die Materialentnahmestelle (11) der Abstandsschicht zumindest im Anschluss an die Perforationslinie der Kunststofffolie (7) auch eine Perforationslinie ist.

5. Kraftfahrzeugverkleidungsteil nach Ansprüchen 3 und 4, **dadurch gekennzeichnet, dass** die beiden Perforationslinien kongruent sind.

6. Kraftfahrzeugverkleidungsteil nach Anspruch 1, **dadurch gekennzeichnet, dass** eine weitere Kunststofffolie derselben Art zwischen der Abstandsschicht und der Trägerschicht angeordnet ist.

7. Kraftfahrzeugverkleidungsteil nach einem der Ansprüche 3 bis 6, **dadurch gekennzeichnet, dass** die Perforationslinie abwechselnd von Schlitzen (14) und Materialstegen (15) gebildet ist und das Längenverhältnis der Schlitze (14) zu den Materialstegen (15) in Linienrichtung etwa 10:1 ist.

8. Kraftfahrzeugverkleidungsteil nach Anspruch 7, **dadurch gekennzeichnet, dass** die Materialstege (15) auf eine Restwandstärke der Kunststofffolie (7) reduziert sind.

9. Kraftfahrzeugverkleidungsteil nach einem der Ansprüche 4 bis 5, **dadurch gekennzeichnet, dass** die Perforationslinien gradlinig oder gewellt oder zick-zack-förmig verlaufen.

10. Kraftfahrzeugverkleidungsteil nach einem der Ansprüche 1 bis 9, **dadurch gekennzeichnet, dass** die Schwächungsstellen (12) in der Dekorschicht (8) und die Schwächungsstellen (11) in der Kunststofffolie (7) versetzt zueinander angeordnet sind.

11. Kraftfahrzeugverkleidungsteil nach einem der Ansprüche 1 bis 10, **dadurch gekennzeichnet, dass** für eine ausreichende Haftung zwischen der Kunststofffolie (7) und der Dekorschicht (8) die an der Dekorschicht (8) innenanliegende, Kunststofffolie (7) oberflächenbehandelt ist, beispielsweise durch Waschen/Abreiben mit einem Reinigungs- bzw. Lösungsmittel, oder Strahlen, oder Plasmabehandlung, oder Fluorierung oder mechanisches Aufrauen etc.

12. Kraftfahrzeugverkleidungsteil nach einem der Ansprüche 1 bis 11, **dadurch gekennzeichnet, dass** die Restwandstärke (d) der Dekorschicht an der Schwächungsstelle 0,2 bis 0,8 mm, vorzugsweise 0,4 bis 0,8 mm beträgt.

13. Kraftfahrzeugverkleidungsteil nach einem der Ansprüche 1 bis 11, **dadurch gekennzeichnet, dass** die Restwandstärke (d) der Dekorschicht (8) an den Schwächungsstellen (12) im sog. Initialbereich, d.h. dort wo sich der Bereich zuerst öffnet, 0,15 bis 0,4 mm und im übrigen Bereich 0,2 bis 0,8 mm und vorzugsweise 0,4 bis 0,8 mm beträgt.

14. Kraftfahrzeugverkleidungsteil nach einem der Ansprüche 1 bis 13, **dadurch gekennzeichnet, dass** das Material der Dekorschicht (8) Leder ist.

15. Verfahren zur Herstellung eines Kraftfahrzeugverkleidungsteils nach einem der Ansprüche 1 bis 14, **gekennzeichnet durch**
- die Abstandsschicht wird zunächst einseitig mit der Kunststofffolie belegt,
- dieses Vorlaminat wird auf die Trägerschicht kaschiert, zumindest mit der Kunststofffolie zur Sichtseite hin,
- anschließend wird das Vorlaminat von der Sichtseite her mit einer geeigneten Vorrichtung geschwächt, insbesondere bis auf die Trägerschicht,
- auf das so präparierte Zwischenlaminat wird die Dekorschicht aufkaschiert, nachdem zuvor auf die der Sichtseite der Dekorschicht abgewandten Innenoberfläche die Schwächung eingebracht wurde.

16. Verfahren zur Herstellung eines Kraftfahrzeugverkleidungsteils nach einem der Ansprüche 1 bis 14, **gekennzeichnet durch**
- die Abstandsschicht wird zumindest einseitig mit der Kunststofffolie belegt,
- in dieses Vorlaminat wird die Schwächung eingebracht, die insbesondere **durch** die gesamte Abstandsschicht verläuft,
- auf dieses so präparierte Vorlaminat wird die Dekorschicht aufkaschiert, nachdem zuvor auf die der Sichtseite der Dekorschicht abgewandten Innenoberfläche die Schwächung eingebracht wurde,
- dieses Zwischenlaminat wird anschließend auf die Trägerschicht kaschiert.

17. Verfahren zur Herstellung eines Kraftfahrzeugverkleidungsteils nach Anspruch 15 oder 16, **dadurch gekennzeichnet, dass** für die Schwächung ein durchgehender Schnitt beliebiger Kontur/Form oder aber ein perforierender Schnitt beliebiger Kontur/Form vorgenommen wird.

18. Verfahren zur Herstellung eines Kraftfahrzeugverkleidungsteils nach Anspruch 15 oder 16, **dadurch gekennzeichnet, dass** die Schwächung durch Lasern, Stanzen oder Fräsen erfolgt.

19. Verfahren zur Herstellung eines Kraftfahrzeugverkleidungsteils nach einem der Ansprüche 16 bis 18, **dadurch gekennzeichnet, dass** die Trägerschicht von der Rückseite her im Bereich der Schwachstellen aufgefräst wird.

20. Verfahren zur Herstellung eines Kraftfahrzeugverkleidungsteils nach einem der Ansprüche 15 bis 19, **dadurch gekennzeichnet, dass** die Kunststofffolie insbesondere auf der Sichtseite vorbehandelt wird.

## Claims

1. Motor vehicle trim element having weakened areas (10, 11, 12) for an airbag deployment opening (3) comprising a carrier layer (5), a spacer layer (6) laminated thereto and a decorative layer (8) on the side of the spacer layer (6) facing away from the carrier layer (5), whereby at specific points, in particular along weakened lines (1) within their area (9), material has been removed or displaced so as to selectively provide weakened areas as predetermined breaking points, wherein these points where material has been removed or displaced (10; 11; 12) terminate (d) in front of the outer surface of the decorative layer (8) and are, therefore, not visible from the outside, **characterized in that** between the inner surface of the decorative layer (8) and the adjacent surface of the spacer layer (6), in each case in contact with the surface of both layers, is disposed a plastic film (7) which has at least one area where material has been removed (11) or one area where material has been displaced in the same weakened area (9).

2. Motor vehicle trim element according to claim 1, **characterized in that** the spacer layer (6) is a foam layer or a knit spacer fabric or a fiber mat.

3. Motor vehicle trim element according to one of claims 1 to 2, **characterized in that** the area where material has been removed (11) from the plastic film (7) is formed by a perforation which in particular is a perforation line.

4. Motor vehicle trim element according to claim 3, **characterized in that** the area where material has been removed (11) from the spacer layer is also a perforation line, at least following on from the perforation line of the plastic film (7).

5. Motor vehicle trim element according to claims 3 and 4, **characterized in that** the two perforation lines are congruent.

6. Motor vehicle trim element according to claim 1, **characterized in that** an additional plastic film of the same type is disposed between the spacer layer and the carrier layer.

7. Motor vehicle trim element according to one of claims 3 to 6, **characterized in that** the perforation line is formed alternately by slots (14) and material ligaments (15) and the length ratio of the slots (14) to the material ligaments (15) is approximately 10:1.

8. Motor vehicle trim element according to claim 7, **characterized in that** the material ligaments (15) are reduced to a residual wall thickness of the plastic film (7).

9. Motor vehicle trim element according to one of claims 4 to 5, **characterized in that** the perforation lines run in straight lines or a wavy or zigzag shape.

10. Motor vehicle trim element according to one of claims 1 to 9, **characterized in that** the weakened areas (12) in the decorative layer (8) and the weakened areas (11) in the plastic film (7) are disposed offset to one another.

11. Motor vehicle trim element according to one of claims 1 to 10, **characterized in that,** for adequate adhesion between the plastic film (7) and the decorative layer (8), the plastic film (7) disposed on the inside of the decorative layer (8) is surface treated, for example by washing/abrasion with a detergent or solvent, or by blasting, or plasma treatment, or fluorination or mechanical roughening, etc.

12. Motor vehicle trim element according to one of claims 1 to 11, **characterized in that** the residual wall thickness (d) of the decorative layer at the weakened area is 0.2 to 0.8 mm, preferably 0.4 to 0.8 mm.

13. Motor vehicle trim element according to one of claims 1 to 11, **characterized in that** the residual wall thickness (d) of the decorative layer (8) at the weakened areas (12) in what is known as the initial area, i.e. where the area first starts, is 0.15 to 0.4 mm and in the remaining area 0.2 to 0.8 mm and preferably 0.4 to 0.8 mm.

14. Motor vehicle trim element according to one of claims 1 to 13, **characterized in that** the material of the decorative layer (8) is leather.

15. Method for the manufacture of a motor vehicle trim element according to one of claims 1 to 14, **characterized in that**
- the spacer layer is faced first of all on one side with the plastic film,
- this pre-laminate is laminated onto the carrier layer, at least with plastic film facing the visible side,
- subsequently the pre-laminate is weakened from the visible side using an appropriate device, in particular up to the carrier layer,
- the decorative layer is laminated onto the pre-laminate thus prepared, once the weakened area has been introduced beforehand on the inner surface facing away from the visible side of the decorative surface.

16. Method for the manufacture of a motor vehicle trim element according to one of claims 1 to 14, **characterized in that**
- the spacer layer is faced on at least one side with the plastic film,
- the weakened area, which runs especially through the entire spacer layer, is introduced into this pre-laminate,
- the decorative layer is laminated onto this intermediate laminate thus prepared once the weakened area has been introduced beforehand on the inner surface facing away from the visible side of the decorative surface,
- this intermediate laminate is subsequently laminated onto the carrier layer.

17. Method for the manufacture of a motor vehicle trim element according to claim 15 or 16, **characterized in that** a continuous cut of any outline/shape or a perforating cut of any outline/shape is executed for the weakened area.

18. Method for the manufacture of a motor vehicle trim element according to claim 15 or 16, **characterized in that** the weakening is carried out by lasering, punching or milling.

19. Method for the manufacture of a motor vehicle trim element according to one of claims 16 to 18, **characterized in that** the carrier layer is milled out from the reverse side in the region of the weakened areas.

20. Method for the manufacture of a motor vehicle trim element according to one of claims 15 to 19, **characterized in that** the plastic film is pre-treated especially on the visible side.

## Revendications

1. Panneau de revêtement pour véhicule, avec des zones d'affaiblissement (10, 11, 12) pour une ouverture de déploiement de sac gonflable de sécurité (3), comprenant une couche support (5), une couche d'espacement (6) appliquée par dessus en surface, et une couche de décoration (8), se trouvant sur le côté, opposé à la couche support (5), de la couche d'espacement (6), où, en des emplacements déterminés, en particulier le long de lignes d'affaiblissement (1), dans leur zone (9), pour obtenir un affaiblissement à dessein sous forme d'emplacements destinés à la rupture, est opéré un prélèvement ou un refoulement de matériau, ces emplacements de prélèvement de matériau (10 ; 11 ; 12) ou emplacements de refoulement de matériau s'achevant avant la surface extérieure de la couche de décoration (8) (d) et, ainsi, n'étant pas visible de l'extérieur, **caractérisé en ce que,** entre la surface intérieure de la couche de décoration (8) et la surface voisine de la couche d'espacement (6), chaque fois en appui sur la surface des deux couches, est disposée une feuille en matière synthétique (7), présentant, dans la même zone d'affaiblissement (9), au moins un emplacement de prélèvement de matériau (11) ou un emplacement de refoulement de matériau.

2. Panneau de revêtement pour véhicule selon la revendication 1, **caractérisé en ce que** la couche d'espacement (6) est une couche de matériau alvéolaire ou un tricot d'espacement ou un non tissé de fibres.

3. Panneau de revêtement pour véhicule selon l'une des revendications 1 à 2, **caractérisé en ce que** l'emplacement de prélèvement de matériau (11) de la feuille en matière synthétique (7) est formé par une perforation, qui est en particulier une ligne de perforations.

4. Panneau de revêtement pour véhicule selon la revendication 3, **caractérisé en ce que** l'emplacement de prélèvement de matériau (11) de la couche d'espacement (6), au moins en raccordement à la ligne de perforations de la feuille en matière synthétique (7), est également une ligne de perforations.

5. Panneau de revêtement pour véhicule selon les revendications 3 et 4, **caractérisé en ce que** les deux lignes de perforations sont congruentes.

6. Panneau de revêtement pour véhicule selon la revendication 1, **caractérisé en ce qu'**une autre feuille en matière synthétique, du même type, est disposée entre la couche d'espacement et la couche support.

7. Panneau de revêtement pour véhicule selon l'une des revendications 3 à 6, **caractérisé en ce que** la ligne de perforations est formée alternativement de fentes (14) et d'entretoises de matériau (15), et le rapport des longueurs, entre les fentes (14) et les entretoises de matériau (15), dans la direction de la ligne, est d'à peu près 10:1.

8. Panneau de revêtement pour véhicule selon la revendication 7, **charactérisé en ce que** les entretoises de matériau (15) sont réduites à une épaisseur de paroi résiduelle de la feuille en matière synthétique (7).

9. Panneau de revêtement pour véhicule selon l'une des revendications 4 à 5, **caractérisé en ce que** les lignes de perforation sont d'allure rectiligne ou ondulée ou en zigzag.

10. Panneau de revêtement pour véhicule selon l'une des revendications 1 à 9, **caractérisé en ce que** les emplacements d'affaiblissement (12) ménagés dans la couche de décoration (8) et les emplacements d'affaiblissement (11) ménagés dans la feuille en matière synthétique (7) sont décalés les uns par rapport aux autres.

11. Panneau de revêtement pour véhicule selon l'une des revendications 1 à 10, **caractérisé en ce que,** pour obtenir une adhésion suffisante, entre la feuille en matière synthétique (7) et la couche de décoration (8), la feuille en matière synthétique (7), appliquée intérieurement sur la couche de décoration (8), est soumise à un traitement de surface, par exemple par lavage/abrasion avec un produit nettoyant ou solvant, ou par projection, ou par traitement au plasma, ou fluoruration ou traitement mécanique d'augmentation de la rugosité.

12. Panneau de revêtement pour véhicule selon l'une des revendications 1 à 11, **caractérisé en ce que** l'épaisseur de paroi résiduelle (d) de la couche de décoration à l'emplacement d'affaiblissement est de 0,2 à 0,8 mm, de préférence de 0,4 à 0,8 mm.

13. Panneau de revêtement pour véhicule selon l'une des revendications 1 à 11, **caractérisé en ce que** l'épaisseur de paroi résiduelle (d) de la couche de décoration aux emplacements d'affaiblissement (12), dans ce que l'on appelle la zone initiale, c'est-à-dire là où la zone s'ouvre en premier, est de 0,15 à 0,4 mm et, dans la zone restante, est de 0,2 à 0,8 mm, de préférence de 0,4 à 0,8 mm.

14. Panneau de revêtement pour véhicule selon l'une des revendications 1 à 13, **caractérisé en ce que** le matériau de la couche de décoration (8) est du cuir.

15. Procédé de fabrication d'un panneau de revêtement pour véhicule selon l'une des revendications 1 à 14, **caractérisé par le fait que** :
- la couche d'espacement est d'abord garnie, sur une face, de la feuille en matière synthétique,
- ce pré-laminé est scellé sur la couche support, au moins avec la feuille en matière synthétique du côté visible,
- ensuite, le pré-laminé est affaibli, depuis le côté visible, à l'aide d'un dispositif approprié, en particulier jusqu'à la couche support,
- la couche de décoration est scellée sur le laminé intermédiaire ainsi préparé, après que, préalablement, l'affaiblissement ait été ménagé sur la surface intérieure, opposée au côté visible de la couche de décoration.

16. Procédé de fabrication d'un panneau de revêtement pour véhicule selon l'une des revendications 1 à 14, **caractérisé par le fait que** :
- la couche d'espacement est d'abord garnie, sur une face, de la feuille en matière synthétique,
- dans ce pré-laminé est ménagé l'affaiblissement, qui s'étend en particulier à travers l'ensemble de la couche d'espacement,
- la couche de décoration est scellée sur ce pré-laminé ainsi préparé, après que, préalablement, l'affaiblissement ait été ménagé sur la surface intérieure, opposée au côté visible de la couche de décoration,
- ce laminé intermédiaire est ensuite scellé sur la couche support.

17. Procédé de fabrication d'un panneau de revêtement pour véhicule selon la revendications 15 ou 16, **caractérisé en ce que,** pour l'affaiblissement, est effectué une découpe continue de contour/forme quelconque, ou une découpe perforante de contour/forme quelconque.

18. Procédé de fabrication d'un panneau de revêtement pour véhicule selon la revendications 15 ou 16, **caractérisé en ce que** l'opération d'affaiblissement est effectuée par application d'un laser, d'un estampage ou d'un fraisage.

19. Procédé de fabrication d'un panneau de revêtement pour véhicule selon l'une des revendications 16 à 18, **caractérisé en ce que** la couche support est fraisée depuis la face dorsale, dans la zone des emplacements d'affaiblissement.

20. Procédé de fabrication d'un panneau de revêtement pour véhicule selon l'une des revendications 15 à 19, **caractérisé en ce que** la feuille en matière synthétique est prétraitée, en particulier sur le côté visible.
